# FASCICULE DE BREVET EUROPEEN

(11) **EP 4 444 599 B1**
(45) Date de publication et mention de la délivrance du brevet: **08.04.2026**
(21) Numéro de dépôt: 22829561.4
(22) Date de dépôt: 17.11.2022
(51) Int. Cl.: B62D 1/22, B62D 5/093, B66F 9/075, B62D 7/15, B62D 5/07

(54) **MACHINE DE MANUTENTION COMPRENANT UN SYSTÈME DE DIRECTION HYDRAULIQUE**
HANDHABUNGSMASCHINE MIT EINER HYDRAULISCHEN LENKUNG
HANDLING MACHINE COMPRISING A HYDRAULIC STEERING SYSTEM

(30) Priorité: 08.12.2021 FR 2113162
(43) Date de publication de la demande: 16.10.2024
(73) Titulaire: MANITOU BF, 44150 Ancenis (FR)
(72) Inventeur: MERTEN, Hervé, 44150 ANCENIS (FR); BIDET, Grégory, 44150 ANCENIS (FR)
(74) Mandataire: Ipsilon
(86) Numéro de dépôt international: PCT/FR2022/052114
(87) Numéro de publication internationale: WO 2023/105135

(56) Documents cités:
- EP-A1- 3 438 039
- US-A1- 2006 089 773

## Description

### DOMAINE DE L'INVENTION

La présente invention concerne de manière générale les machines de manutention comprenant un système de direction hydraulique.

### ART ANTERIEUR

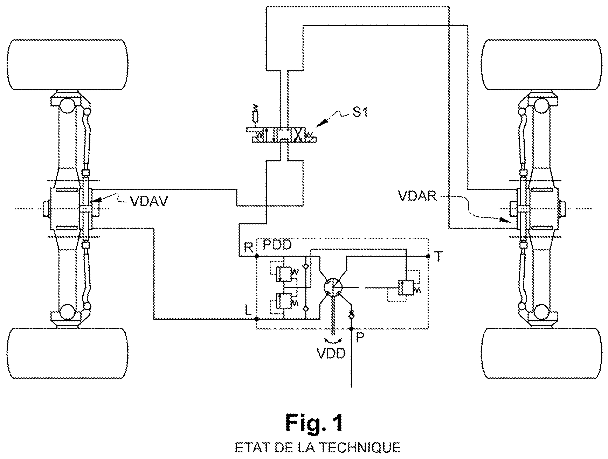

Comme illustré à la Figure 1, on connait de l'état de la technique des machines de manutention comprenant des systèmes de direction hydrauliques qui permettent de diriger les roues avant et arrière de la machine.

Un tel système de direction hydraulique comprend un circuit de direction raccordé à un système de vérins de direction avant VDAV et à un système de vérins de direction arrière VDAR. Le système de direction hydraulique comprend aussi une pompe de direction PDD, ainsi qu'un dispositif de commande mécanique, tel qu'un volant de direction VDD. Le volant de direction permet de diriger l'huile vers l'une ou l'autre des lignes R, L connectées à la pompe de direction PDD. Un sélecteur S1 permet de sélectionner le mode de fonctionnement du circuit de direction. La pompe de direction PDD présente une voie T de raccordement à un réservoir d'huile, et une voie P de raccordement à une pompe d'alimentation.

Cependant, les systèmes de direction hydrauliques connus qui utilisent des dispositifs de commande mécanique n'offrent pas la possibilité de mettre en œuvre de manière fiable, simple et sécurisée une commande électrique du circuit de direction hydraulique pour fournir une fonction d'assistance ou d'autonomie pour la manœuvre ou conduite de la machine de manutention. Le document US2006/089773 décrit un véhicule de travail qui comprend un châssis, un système de travail tel qu'une tringlerie et les vérins hydrauliques associés, un système de direction, un système de propulsion et un système de commande multimode comprenant un contrôleur central. Dans un premier mode, le contrôleur central manipule le système de travail en fonction des signaux reçus d'un dispositif de commande du système de travail. Dans un second mode, le contrôleur central commande au moins le système de direction et le système de propulsion en fonction des signaux reçus du dispositif de commande du système de travail.

La présente invention a pour but de proposer une machine de manutention correspondante permettant de pallier tout ou partie des problèmes exposés ci-dessus.

### RESUME DE L'INVENTION

A cet effet, l'invention a pour objet une machine de manutention de manutention comprenant :
- un châssis roulant ;
- un système de manutention comprenant au moins un organe de manutention, actionnable par un vérin hydraulique, tel qu'un vérin d'inclinaison d'un porte-outil de la machine ;
- un système de direction comprenant :
   - un circuit de direction hydraulique comprenant des vérins de direction permettant de diriger au moins une partie des roues de la machine ;
   - un premier circuit de commande hydraulique raccordé au circuit de direction pour pouvoir alimenter les vérins de direction, et un dispositif manuel de direction, tel qu'un volant, raccordé au premier circuit de commande hydraulique ;
   - un deuxième circuit de commande hydraulique utilisé pour au moins la commande du vérin hydraulique d'actionnement d'un organe de manutention ;
caractérisée en ce que :
le deuxième circuit de commande hydraulique comprend :
   - un distributeur hydraulique,
   - un circuit de raccordement hydraulique raccordé au circuit de direction hydraulique, et
   - un déviateur auquel est raccordé le circuit de raccordement, le vérin hydraulique d'actionnement d'un organe de manutention, et le distributeur hydraulique,
le déviateur étant commandable électriquement pour prendre sélectivement :
   - un premier état selon lequel le distributeur hydraulique du deuxième circuit de commande hydraulique est relié au vérin hydraulique d'actionnement dudit organe de manutention, et
   - un deuxième état selon lequel le distributeur hydraulique du deuxième circuit de commande hydraulique est relié au circuit de raccordement qui est raccordé au circuit de direction, pour permettre au deuxième circuit de commande hydraulique de commander les mêmes vérins de direction que ceux commandables avec le premier circuit de commande hydraulique ;
   - une unité de pilotage configurée pour commander le déviateur pour l'amener dans le deuxième état selon lequel le distributeur hydraulique est relié au circuit de raccordement qui est raccordé au circuit de direction afin de pouvoir exécuter un programme de commande de direction de la machine de manutention, par exemple pour garer automatiquement la machine de manutention à un endroit donné.

Ainsi, la machine de manutention comprend un circuit de commande électro-hydraulique du circuit de direction qui est implanté en parallèle du circuit de commande hydraulique classique à commande mécanique.

On obtient ainsi une possibilité de commande électrique de la direction hydraulique permettant de mettre en œuvre une assistance à la commande de la direction ou une autonomisation de la commande de la direction, tout en limitant les composants ajoutés et en conservant une commande mécanique, telle qu'un volant, pour permettre de commander mécaniquement le circuit de direction hydraulique.

Le système de direction de la machine de manutention permet ainsi de bénéficier d'une architecture de double système de commande du circuit de direction hydraulique, aptes à fonctionner en parallèle l'un de l'autre, indépendamment ou en complément l'un de l'autre.

Le système de direction peut en particulier comprendre :
- le système de direction hydraulique d'origine homologué de la machine de manutention qui permet de commander le circuit de direction hydraulique de la machine à l'aide d'un circuit de commande hydraulique commandé par une commande mécanique, telle qu'un volant de direction, et
- un système hydraulique de commande du circuit de direction, commandable électriquement, qui peut réutiliser une partie d'un distributeur hydraulique du circuit hydraulique de la machine pour permettre de commander sélectivement un vérin hydraulique pour actionner un élément du système de manutention de la machine, et le circuit de direction hydraulique de la machine.

Pour la commande de direction de la machine à l'aide du deuxième circuit de commande, on peut prévoir que l'unité de pilotage pilote aussi le distributeur hydraulique pour fournir un débit donné sur l'une ou l'autre voie du circuit de raccordement. L'unité de pilotage peut aussi piloter une ou plusieurs autres organes permettant de commander le déplacement de la machine.

Dans le cas d'une machine modifiée, le circuit hydraulique de direction d'origine est conservé de sorte que la conformité de la machine n'est pas altérée.

Une variation de vitesse de direction peut être commandée par un tiroir proportionnel du distributeur (par exemple un distributeur d'origine) du circuit de commande électrohydraulique de la machine.

La machine peut aussi comporter une ou plusieurs des caractéristiques suivantes prises dans toute combinaison techniquement admissible.

Selon un mode de réalisation de l'invention, le système de direction est configuré pour que le premier circuit de commande hydraulique reste commandable par le conducteur de la machine de manutention à l'aide du dispositif manuel de direction pour agir sur le circuit de direction, en complément ou en correction du deuxième circuit de commande hydraulique.

Selon un mode de réalisation de l'invention, le premier circuit de commande et le deuxième circuit de commande sont agencés avec le circuit de direction pour agir sur les mêmes lignes du circuit de direction, de sorte que le deuxième circuit de commande est agencé pour agir sur la direction des mêmes roues que celles sur lesquelles le premier circuit de commande est agencé pour agir, et inversement.

Autrement dit, pour un état donné du sélecteur lorsque la machine est munie d'un sélecteur, les roues sur lesquelles agit le deuxième circuit de commande, par l'intermédiaire du circuit de direction, sont les mêmes que celles sur lesquelles agit le premier circuit de commande.

Selon un mode de réalisation de l'invention, la machine de manutention comprend des roues avant et des roues arrière, le circuit de direction étant configuré pour permettre de diriger au moins les roues avant.

Selon un mode de réalisation de l'invention, le deuxième circuit de commande hydraulique est raccordé à des lignes du circuit de direction qui sont raccordées au premier circuit de commande hydraulique.

Selon un mode de réalisation de l'invention, le circuit de direction comprend un sélecteur permettant de sélectionner les roues à diriger.

Selon un mode de réalisation de l'invention, le circuit de direction comprenant un sélecteur permettant de sélectionner les roues à diriger, le deuxième circuit de commande hydraulique est raccordé au circuit de direction, entre le premier circuit de commande et le sélecteur.

Selon un mode de réalisation de l'invention, le circuit de direction comprend un sélecteur configuré pour pouvoir prendre sélectivement plusieurs états, dont :
- un état dans lequel les lignes du circuit de direction sont configurées de sorte que seules les roues avant sont dirigeables à l'aide du circuit de direction hydraulique ;
- un état dans lequel les lignes du circuit de direction sont configurées de sorte que les roues avant et les roues arrière sont dirigeables dans le même sens à l'aide du circuit de direction hydraulique ; et
- un état dans lequel les lignes du circuit de direction sont configurées de sorte que les roues avant et les roues arrière sont dirigeables en sens opposé les unes des autres à l'aide du circuit de direction hydraulique.

Selon un mode de réalisation de l'invention, une ligne du deuxième circuit de commande hydraulique est raccordée à une ligne du circuit de direction qui s'étend entre le sélecteur et le premier circuit de commande hydraulique.

Selon un mode de réalisation de l'invention, une autre ligne du deuxième circuit de commande hydraulique est raccordée à une ligne du circuit de direction qui s'étend entre un vérin de direction, de préférence un vérin de direction d'une roue avant, et le premier circuit de commande hydraulique.

Selon un mode de réalisation de l'invention, le vérin hydraulique d'actionnement d'un organe de manutention est un vérin d'inclinaison d'un porte-outil de la machine de manutention.

Selon un mode de réalisation de l'invention, au moins l'un, de préférence chacun, des premier et deuxième circuits de commande, comprend un dispositif limiteur de pression.

Selon un mode de réalisation de l'invention, au moins l'un, de préférence chacun, des dispositifs limiteur de pression comprend une double valve d'équilibrage.

Selon un mode de réalisation de l'invention, le dispositif limiteur de pression du premier circuit de commande est situé entre une pompe de distribution du premier circuit de commande et le circuit de direction hydraulique.

Selon un mode de réalisation de l'invention, le dispositif limiteur de pression du deuxième circuit de commande est situé sur le circuit de raccordement.

Pour permettre au circuit de direction d'être commandé par deux circuits de commande indépendants, à savoir un circuit de commande actionné mécaniquement, et un circuit de commande actionné électriquement, sans que ces circuits de commande se perturbent, chaque circuit de commande peut être muni d'un dispositif limiteur de pression piloté.

Pour éviter d'avoir à ajouter un composant comme source de puissance hydraulique du circuit de commande électro-hydraulique (circuit dit secondaire), on peut prévoir que le circuit de commande électro-hydraulique ré-utilise une tranche (partie) d'un distributeur hydraulique à commande électro-proportionnelle déjà présent dans le circuit hydraulique de la machine de manutention et utilisé initialement pour commander un vérin d'actionnement d'un élément du système de manutention de la machine, tel qu'un vérin tel qu'un vérin d'inclinaison d'un porte-outil de la machine. Le déviateur peut être ajouté en étant raccordé, d'une part, à une paire de voies de ladite partie du distributeur hydraulique et, d'autre part, à un circuit hydraulique de liaison vers le circuit de direction.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la Figure 1 est une vue schématique d'un système de direction d'une machine de manutention, selon un exemple connu de l'état de la technique ;
- la Figure 2 est une vue schématique d'un système de direction d'une machine de manutention, selon un mode de réalisation de l'invention ;
- la Figure 2A est une vue schématique d'une partie du système de direction de la Figure 2 ;
- la Figure 3 est une vue schématique d'un dispositif limiteur de pression d'un système de direction pour une machine de manutention, selon un mode de réalisation de l'invention ;
- la Figure 3A est une vue schématique du dispositif limiteur de pression de la Figure 3, dans un premier état de fonctionnement ;
- la Figure 3B est une vue schématique du dispositif limiteur de pression de la Figure 3, dans un deuxième état de fonctionnement ;
- la Figure 3C est une vue schématique du dispositif limiteur de pression de la Figure 3, dans un troisième état de fonctionnement ;
- la Figure 4 est une vue schématique d'une machine de manutention, selon un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Il est proposé une machine de manutention qui comprend un système de direction permettant de diriger au moins une partie des roues, de préférence au moins les roues avant, à l'aide d'une commande manuelle, telle qu'un volant de direction, et/ou à l'aide d'une commande électrique en complément de la commande manuelle ou de manière autonome.

La machine de manutention comprend un châssis roulant qui porte un système de manutention de charge ou de personne, tel qu'un bras de levage équipé à son extrémité d'un porte-outil et d'un outil couplé au porte-outil. Le système de manutention comprend un système de vérins qui permet d'actionner un ou plusieurs éléments du système de manutention. Le système de vérins du système de manutention peut par exemple comprendre un vérin d'actionnement du bras de levage et un vérin d'inclinaison pour incliner le porte-outil par rapport au bras.

### Machine de manutention

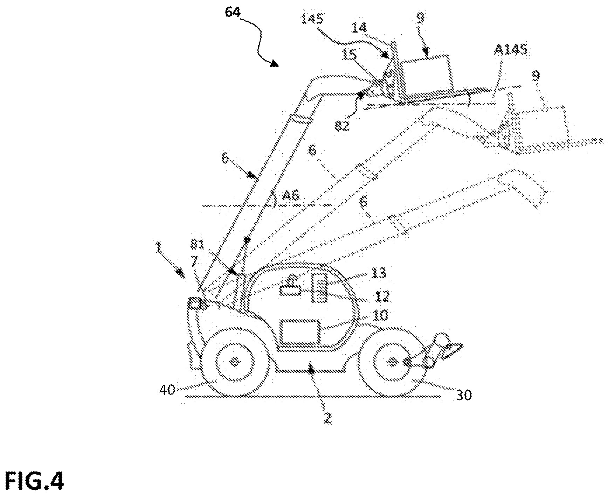

A la Figure 4, on a représenté un exemple de machine de manutention 1 selon un mode de réalisation auquel le système de direction présenté ci-après est applicable. La machine de manutention 1 peut aussi être appelée chariot de manutention.

La machine de manutention 1 comprend un châssis 2 roulant supporté sur le sol par l'intermédiaire d'un essieu avant 30 comprenant deux roues avant et d'un essieu arrière 40 comprenant deux roues arrière.

La machine de manutention 1 comprend un système motorisé de déplacement de la machine. Le système motorisé de déplacement de la machine comprend par exemple un moteur électrique et/ou un moteur à combustion interne, un système de transmission aux roues et un système de direction permettant de déplacer et diriger la machine.

Le châssis 2 roulant porte un système de manutention 64. Le système de manutention 64 peut comprendre un bras 6, usuellement appelé bras de levage, articulé au châssis 2 roulant pour pouvoir être déplacé entre une position dite abaissée et une position levée, et un dispositif de manutention 14, 145. En variante, le système de manutention 64 peut être porté par une tourelle montée pivotante sur le châssis.

Le bras de levage 6 est articulé au châssis 2 dans une zone plus proche du pont arrière que du pont avant.

Le dispositif de manutention 145, 14 est articulé à une extrémité du bras 6 de levage. Un système de vérins comprend un vérin 81 qui permet de déplacer ledit bras de levage par rapport au châssis 2 et un vérin 82 qui permet de déplacer le dispositif de manutention 145, 14 par rapport au bras 6 de levage.

La machine de manutention inclut une unité de pilotage 10, comprenant par exemple un calculateur, qui permet à l'opérateur, par l'intermédiaire d'une interface homme-machine, qui peut comprendre un organe de commande 12, tel qu'un joystick, de piloter la machine de manutention, et notamment de piloter le sens de déplacement (avant - arrière) de la machine et/ou la position du bras 6 et/ou le dispositif de manutention 145,14.

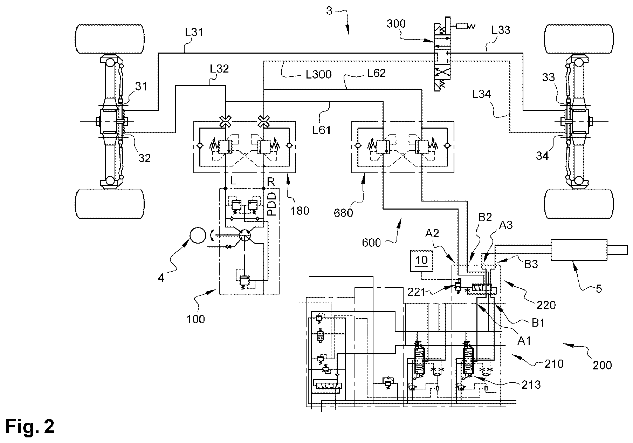

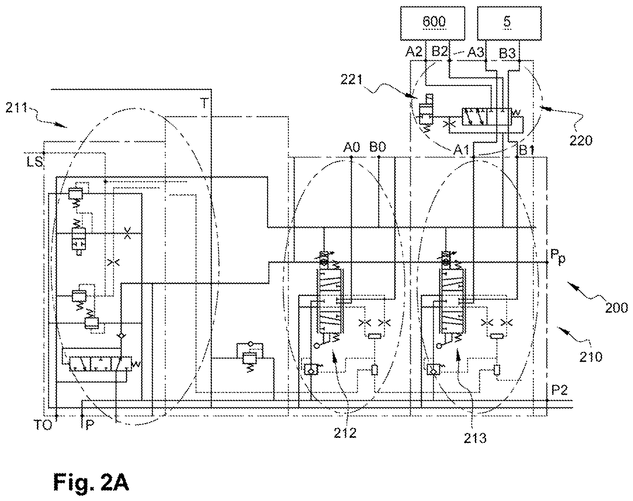

Comme détaillé ci-après en lien avec les Figures 2 et 2A, l'unité de pilotage 10 peut être aussi utilisée pour permettre de piloter un circuit de commande 200 du circuit de direction 3. La machine de manutention inclut aussi un volant de direction 4 permettant comme détaillé ci-après de commander manuellement un autre circuit de commande 100 du circuit de direction 3.

Le bras 6 de levage (ou bras de manutention) est monté sur le châssis 2 et orientable autour d'un axe de rotation 7. En particulier, ledit axe de rotation 7 est horizontal lorsque le châssis 2 roulant est en appui sur un sol horizontal. Le bras 6 est saillant vers l'avant de la machine.

Autrement dit, le bras 6 est configuré pour pivoter autour d'un axe transversal à l'axe longitudinal de la machine (axe horizontal lorsque la machine est en appui sur un sol horizontal) pour être déplacé entre une position abaissée et une position levée.

Le bras 6 de levage forme un angle référencé A6 avec une position de référence telle que l'horizontale (ou le plan d'appui au sol de la machine). A la Figure 4, le tablier 145 est incliné par rapport à une position de référence telle que l'horizontale d'un angle référencé A145.

Le bras permet d'atteindre différents angles d'inclinaison par rapport au plan d'appui au sol des roues de la machine, et notamment d'atteindre en position haute un angle maximal, par exemple de valeur comprise entre 55° et 70°, par rapport au plan d'appui au sol des roues de la machine.

Selon un mode de réalisation, l'angle minimal que peut atteindre le bras en position basse par rapport au plan d'appui au sol des roues de la machine est par exemple compris entre - 5° et 5 °. Avantageusement, le bras présente un débattement angulaire d'au moins 50°.

### Dispositif de manutention

Le dispositif de manutention comprend un porte-outil 145, encore appelé tablier, et un outil 14 de manutention fixé au porte-outil de manière démontable. Le porte-outil peut recevoir différents types d'outils de manutention. En variante, on peut prévoir que l'outil soit intégré au porte-outil (c'est-à-dire non démontable).

Le porte-outil 145 est monté articulé par rapport au bras 6 de levage. Le dispositif de manutention est articulé au bras 6 par une liaison 15 d'axe parallèle à l'axe 7 et configuré pour pouvoir réaliser différentes opérations selon l'outil de manutention couplé au tablier.

Dans l'exemple illustré à la Figure 4, l'outil de manutention comprend des fourches pour manier une charge 9, telle qu'une palette ou une botte de paille, mais les fourches peuvent être remplacées par différents outils, par exemple un godet.

Dans l'exemple illustré à la Figure 4, le bras 6 est du type télescopique. Le bras 6 comprend ainsi au moins deux segments déployables à l'aide d'un vérin de déploiement, non représenté, agencé entre les au moins deux segments. En variante, le bras peut être un bras non télescopique.

Comme rappelé ci-dessus, une interface homme-machine qui comprend l'organe de commande 12, est connectée à l'unité de pilotage 10 qui peut ainsi commander les vérins 81, 82, par l'intermédiaire d'un circuit hydraulique, en fonction de la sollicitation par l'opérateur de l'organe de commande 12, tel qu'un joystick. L'interface homme-machine peut aussi comprendre un écran 13 qui permet par exemple à l'opérateur d'avoir un retour d'information des actions qu'il effectue.

Pour commander le système de vérins hydrauliques du système de manutention, le circuit hydraulique de la machine de manutention comprend une source de pression hydraulique et un distributeur hydraulique intercalé entre la source de pression hydraulique et une électrovanne de commande pour chaque vérin hydraulique. Chaque électrovanne de commande peut être commandée par l'unité de pilotage 10.

La machine de manutention comprend aussi un système de direction qui inclut un circuit de direction hydraulique présenté ci-après.

### Circuit de direction hydraulique

Le système de direction de la machine de manutention comprend un circuit de direction 3 hydraulique qui comprend des vérins de direction hydrauliques associés aux roues de la machine et des lignes d'alimentation de ces vérins. Le système de direction de la machine décrit ci-après peut s'appliquer à une machine de manutention telle que celle décrite en référence à la Figure 4, mais également à d'autres machines de manutention qui comprennent un système de manutention incluant au moins un vérin hydraulique permettant d'actionner un élément du système de manutention.

Selon un mode de réalisation et comme illustré à la Figure 2, les vérins de direction comprennent un système de vérins 31, 32 associé aux roues avant (pont avant) et alimentable par les lignes L31, L32, et un système de vérins 33, 34 associé aux roues arrière (pont arrière) et alimentable par les lignes L33, L34.

Chaque système de vérin associé aux roues avant ou arrière peut comprendre deux vérins distincts comprenant chacun un corps de vérin et un piston monté coulissant à l'intérieur du corps de vérin et présentant une tige qui sort d'un côté du corps du vérin pour être couplé à une roue. En variante, chaque système de vérin peut comprendre deux vérins comprenant un corps de vérin commun et deux pistons montés coulissants à l'intérieur du corps, chaque piston présentant une tige qui sort du corps du vérin du côté opposé à l'autre tige.

Un sélecteur 300 permet de diriger l'huile du circuit de direction 3 hydraulique vers les vérins de direction avant uniquement, ou vers les vérins de direction avant et vers ceux arrière. En particulier, selon le mode sélectionné au niveau du sélecteur, les vérins de direction arrière peuvent être commandés dans le même sens que les vérins de direction avant ou en sens opposé.

Le circuit de direction 3 comprend aussi une ligne L300 raccordée d'une part à une voie ou ligne d'un premier circuit de commande 100 hydraulique et à une voie ou ligne d'un second circuit de commande 200 hydraulique présentés ci-après, et d'autre part au sélecteur 300. Selon la position du sélecteur, la ligne L300 peut être mise directement en liaison avec la ligne L31 de sorte que seules les roues avant peuvent être dirigées, ou avec la ligne L34 de manière à diriger les roues arrière dans le même sens que les roues avant (la ligne L33 étant alors mise en communication avec la ligne L31), ou avec la ligne L33 de manière à diriger les roues arrière en sens opposé par rapport aux roues avant (la ligne L34 étant mise en communication avec la ligne L31).

### Premier circuit de commande hydraulique

Un premier circuit de commande 100 hydraulique est raccordé au circuit de direction 3 hydraulique pour pouvoir alimenter tout ou partie des systèmes de vérins de direction.

Le premier circuit 100 de commande hydraulique peut être un circuit de commande hydraulique d'origine de la machine de manutention, et la machine peut être modifiée pour réaliser le circuit 200 de commande présenté ci-après.

Le système de direction de la machine comprend un volant de direction 4 raccordé à une pompe de direction PDD du premier circuit 100 de commande hydraulique pour pouvoir envoyer de l'huile par l'une des voies L, R du premier circuit 100 de commande hydraulique qui sont raccordées au circuit de direction 3 hydraulique.

Ainsi de l'huile peut être envoyée sur la voie L en tournant le volant de direction 4 dans un sens, et sur l'autre voie R du premier circuit 100 de commande hydraulique en tournant le volant de direction 4 dans l'autre sens.

Selon un mode de réalisation, la voie L est raccordée à la ligne L32 du système de vérin avant, et la voie R est raccordée à la ligne L300 qui est reliée au sélecteur 300 pour, selon le mode (état) sélectionné du sélecteur, alimenter par la ligne L300 uniquement l'autre ligne L31 du système de vérin avant, ou alimenter l'une ou l'autre des lignes L33, L34 du système de vérin arrière.

Comme détaillé ci-après, selon un mode de réalisation préféré, un dispositif limiteur de pression 180 est situé sur le circuit de commande 100, de préférence en étant interposé entre la pompe de direction PDD et le circuit de direction 3.

### Deuxième circuit de commande hydraulique

Un deuxième circuit 200 de commande hydraulique est utilisé pour pourvoir sélectivement commander au moins un vérin 5 d'actionnement d'un organe du système de manutention, tel qu'un vérin d'inclinaison d'un porte-outil de la machine, et commander le circuit de direction 3 hydraulique comme détaillé ci-après.

Le circuit de direction 3 hydraulique peut ainsi être alimenté par le premier circuit 100 de commande hydraulique et le deuxième circuit 200 de commande hydraulique. Le premier circuit 100 de commande hydraulique pilotable par l'opérateur à l'aide du volant de direction 4, permet si besoin de contrer le deuxième circuit 200 de commande hydraulique qui est pilotable par une unité de pilotage.

Comme détaillé ci-après, le deuxième circuit 200 de commande hydraulique peut ainsi être utilisé en complément, en tant qu'assistance, du premier circuit 100 de commande hydraulique, ou sans fonctionnement du premier circuit 100 de commande par exemple pour une commande autonome du circuit de direction 3 hydraulique.

Le deuxième circuit 200 de commande hydraulique comprend un distributeur hydraulique 210 à commande électrique proportionnelle.

Comme illustré aux Figures 2 et 2A, le distributeur hydraulique 210 comprend une partie (ou tranche) présentant deux lignes A1, B1 permettant d'alimenter :
- soit le vérin 5 d'actionnement ;
- soit le circuit de direction 3, via le circuit de raccordement 600 présenté ci-après.

Le deuxième circuit 200 de commande hydraulique est commandé électriquement de manière proportionnelle à l'aide d'une électrovanne pour fournir à la double ligne A1, B1 un débit correspondant à la fonction souhaitée.

La double ligne A1, B1 est connectée au déviateur 220 pour pouvoir être sélectivement aiguillée vers la double ligne A3, B3 du vérin d'actionnement 5, ou vers la double ligne A2, B2 du circuit de raccordement connecté au circuit de direction 3.

Le distributeur hydraulique 210 peut comprendre tout ou partie d'un distributeur hydraulique présent d'origine sur la machine et qui est utilisé pour commander l'alimentation du vérin 5, tel qu'un vérin d'inclinaison d'un porte-outil de la machine.

Dans l'exemple illustré en particulier à la Figure 2 et à la Figure 2A, le distributeur hydraulique 210 comprend une plaque d'entrée de distributeur 211, et plusieurs tranches de distributeurs 212, 213. Chaque tranche de distributeur présente une double ligne A0, B0 et respectivement A1, B1. La double ligne A0, B0 peut être utilisée pour alimenter un autre actionneur hydraulique.

Dans l'exemple de la Figure 2A, la référence LS correspond à un signal hydraulique de mesure de charge (Load Sensing en anglais), et la référence Pp correspond à une alimentation pour pression de pilotage du distributeur. Les références T et TO correspondent à un retour au réservoir hydraulique et les références P et P2 correspondent à des alimentations hydrauliques.

### Déviateur

Le deuxième circuit 200 de commande hydraulique comprend un déviateur 220 commandable électriquement.

Le déviateur 220 est raccordé à la double ligne A1, B1 d'une tranche (partie) du distributeur hydraulique 210. Avantageusement, la tranche du distributeur hydraulique 210 choisie pour être raccordée au déviateur permet de fournir un débit d'huile adapté à un circuit de direction.

Le déviateur 220 présente :
- un premier état permettant de relier les deux lignes A1, B1, c'est-à-dire une double ligne, du distributeur hydraulique 210 du deuxième circuit 200 de commande hydraulique à une double lignes A3, B3 d'un vérin d'actionnement 5 dudit organe de manutention, pour alimenter le vérin d'actionnement 5, et
- un deuxième état, permettant de relier les deux lignes A1, B1 du distributeur hydraulique 210 du deuxième circuit 200 de commande hydraulique à une double ligne A2, B2 d'un circuit de raccordement 600 du distributeur hydraulique 210 au circuit de direction 3, pour alimenter le circuit de direction 3 via le circuit de raccordement 600.

Dans le deuxième état, les lignes A3, B3 d'alimentation du vérin d'actionnement 5 ne sont plus reliées aux lignes A1, B1 de sorte que le vérin d'actionnement 5 n'est plus alimenté.

Le déviateur 220 permet ainsi de sélectionner un état dans lequel la double ligne A1, B1 du distributeur hydraulique 210 est en communication avec la double lignes A3, B3 d'un vérin d'actionnement 5 dudit organe de manutention, pour alimenter le vérin d'actionnement 5, ou un état dans lequel la double ligne A1, B1 du distributeur hydraulique 210, est en communication avec la double ligne A2, B2 pour alimenter le circuit de direction 3.

La commande de l'état du déviateur 220, c'est-à-dire de la sélection du raccordement (ou mise en communication fluidique) du distributeur hydraulique 210 avec le vérin d'actionnement 5, ou avec le circuit de direction 3, est réalisé de manière électrique. Le déviateur 220 comprend ainsi un organe de commande électrique 221 pilotable par une unité de pilotage, telle que l'unité de pilotage 10, pour faire passer le déviateur 220 dans le premier état ou le deuxième état.

Selon un mode de réalisation, le circuit de raccordement 600 est raccordé au circuit de direction 3 entre le sélecteur 300 et le premier circuit de commande 100.

Dans l'exemple illustré à la Figure 2, le circuit de raccordement 600, qui permet d'assurer la liaison entre les lignes A1, B1 du distributeur hydraulique 210 et le circuit de direction 3, est raccordé aux lignes L300, L32 de la partie avant du circuit de direction 3.

Le circuit de raccordement 600 du distributeur hydraulique 210 au circuit de direction 3 comprend ainsi une ligne L62 qui relie une voie B2 du déviateur 220 à la ligne L300 du circuit de direction 3. Comme expliqué ci-avant, la ligne L300 est la ligne qui relie une voie R du circuit de commande 100 au sélecteur 300. Le circuit de raccordement 600 du distributeur hydraulique 210 au circuit de direction 3 comprend aussi une autre ligne L61 qui s'étend de la voie A2 du déviateur 220 à la ligne L32 du circuit de direction 3. Comme expliqué ci-avant, la ligne L32 est la ligne qui relie l'autre voie L du circuit de commande 100 au vérin 32 du système de vérins des roues avant.

Le déviateur 220 connecté aux lignes A1, B1 de la tranche 211 du distributeur hydraulique 210 permet de bénéficier sélectivement de deux double lignes A2, B2 et A3, B3 proportionnelles, à partir d'une seule double ligne A1, B1 d'un distributeur hydraulique à commande proportionnelle. La commande électrique du déviateur est de type tout ou rien.

### Unité de pilotage

L'unité de pilotage qui est utilisée pour piloter l'organe de commande électrique 221 du déviateur 220 et la ou les électrovannes du distributeur hydraulique 210, peut être en tout ou partie commune avec l'unité de pilotage de la machine de manutention utilisée pour piloter le système de manutention de la machine.

L'unité de pilotage 10 est configurée pour permettre de commander le déviateur électronique 220 pour l'amener dans le deuxième état de liaison du distributeur hydraulique 210 au circuit de raccordement 600.

Dans ce deuxième état du déviateur 220, l'unité de pilotage 10 peut être configurée pour exécuter un programme de commande de direction automatique de la machine de manutention, par exemple pour garer automatiquement la machine de manutention à un endroit donné.

La commande de direction automatique de la machine de manutention s'effectue alors par une commande électrique du distributeur hydraulique 210 qui est raccordé au circuit de direction 3.

Une telle conception du système de direction permet à l'unité de pilotage 10 de commander automatiquement la direction de la machine en actionnant l'organe de commande électrique 221 tout ou rien du déviateur 220 pour relier les voies A1, B1 aux voies A2, B2, et en pilotant la commande proportionnelle du distributeur hydraulique 210 pour envoyer le débit souhaité par la ligne A1 ou la ligne B1, de manière à commander le circuit de direction 3 par l'intermédiaire du circuit de raccordement 600.

Selon un mode de réalisation, l'unité de pilotage est aussi configurée pour permettre de piloter le sélecteur 300. Dans l'exemple illustré aux figures, le sélecteur 300 permet de faire fonctionner la machine en mode roues avant directionnelles seules, en isolant la partie, appelée partie avant du circuit de direction, située entre le sélecteur et les vérins de direction avant, qui permet d'alimenter les vérins de direction des roues avant, de la partie, appelée partie arrière du circuit de direction, située entre le sélecteur 300 et les vérins de direction arrière, qui permet d'alimenter les vérins de direction des roues arrière.

Comme rappelé ci-dessus, selon l'état dans lequel le sélecteur 300 se trouve, le sélecteur 300 permet aussi de faire fonctionner les vérins de direction arrière en même temps que les vérins de direction avant, dans le même sens ou en sens contraire.

Préférentiellement, le premier 100 circuit de commande hydraulique reste commandable par le conducteur à l'aide du volant de direction 4 pour agir sur le circuit de direction 3, en complément ou en correction du deuxième circuit 200 de commande hydraulique piloté électriquement.

On peut prévoir que l'organe de commande électrique 221 du déviateur soit ramené dans le premier état lorsqu'une commande du vérin hydraulique 5 est détectée, par exemple par détection par l'unité de pilotage d'une sollicitation par l'opérateur d'un organe de commande du vérin hydraulique 5.

La ou chaque unité de pilotage se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de pilotage peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

L'unité de pilotage est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

### Dispositif limiteur de pression

Selon un mode de réalisation, au moins un, de préférence chacun, des circuits de commande 100, 200 hydrauliques est muni d'un dispositif limiteur de pression (encore appelé dispositif de couplage hydraulique).

Comme illustré à la Figure 2, le premier circuit 100 de commande hydraulique comprend un dispositif limiteur de pression 180. Le circuit de raccordement 600 du circuit de commande 200 comprend aussi un dispositif limiteur de pression 680.

Les dispositifs limiteur de pression 180, 680 permettent d'empêcher une perturbation du premier circuit de commande 100 hydraulique, et du deuxième circuit de commande 200 électro-hydraulique, l'un par rapport à l'autre.

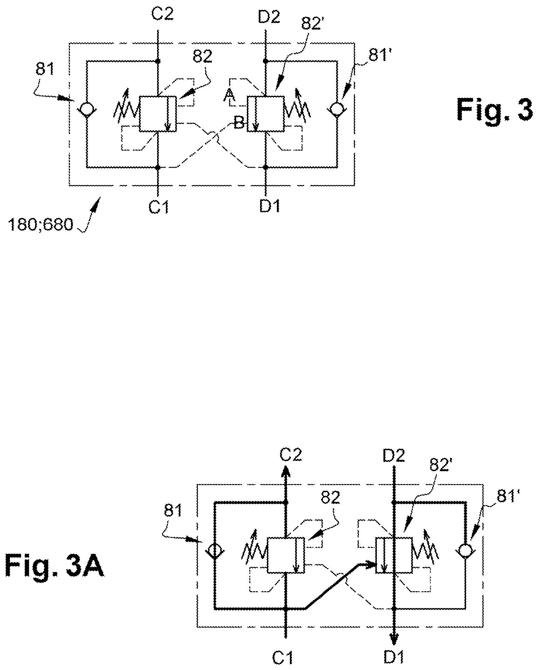

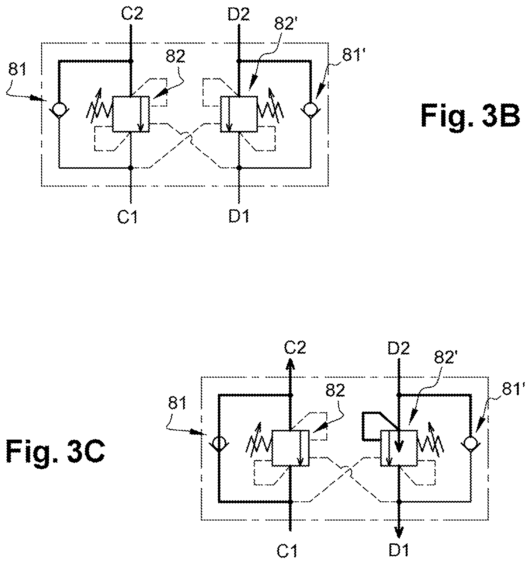

Selon un mode de réalisation, chaque dispositif limiteur de pression comprend un premier ensemble incluant un clapet anti-retour 81 et une valve 82 (à gauche sur la Figure 3), permettant de contrôler le passage de fluide sur une ligne C2, C1 et un deuxième ensemble incluant un clapet anti-retour 81' et une valve 82' (à droite sur la Figure 3), permettant de contrôler le passage de fluide sur une ligne D2, D1.

La Figure 3 illustre un tel composant et les Figures 3A-3C illustrent des cas de fonctionnement. Le dispositif limiteur de pression étant symétrique, la moitié des cas de fonctionnement est présentée ci-dessous.

Avec une montée en pression en A de la valve 82', c'est-à-dire une surface de pilotage en entrée de la valve 82', le dispositif limiteur de pression se comporte comme un limiteur de pression classique, et la valve 82' s'ouvre donc à la pression de réglage du ressort correspondant (par exemple 300 bars). Dans ce cas le dispositif limiteur de pression fonctionne en « clapet anti choc ».

Avec une montée en pression en B, c'est-à-dire dans la zone de pilotage de la valve 82' reliée à une voie de l'autre valve 82, on utilise une surface de pilotage supérieure, par exemple de 4 à 8 fois supérieures, à la surface utilisée en A. Il faut donc une pression inférieure, par exemple 4 à 8 fois inférieures, au réglage du ressort pour ouvrir le tiroir (par exemple 50 bars). Dans ce cas, le composant fonctionne en « clapet à pilotage externe ».

### Cas d'une commande de mouvement sur un vérin

Le cas illustré à la Figure 3A utilise la fonction clapet a pilotage externe. De l'huile envoyée sur la voie C1, passe par le clapet 81 anti-retour et sort par la voie C2 pour alimenter un vérin de direction du circuit de direction 3. Le vérin de direction refoule un volume d'huile sur la voie D2, l'huile étant au début bloquée par le clapet 81' et le limiteur de pression 82' qui sont non passant. La pression monte alors sur la ligne C1C2 jusqu'à ouvrir la valve 82' et faire circuler le refoulement du vérin vers le réservoir d'huile (c'est-à-dire de D2 vers D1).

### Cas d'un effet externe sur le dispositif limiteur de pression

Le cas illustré à la Figure 3B utilise la fonction clapet antichoc des deux valves. Une pression peut se créer en C2 ou D2 par une charge menante (support d'une masse), par un choc sur le vérin, ou encore par une alimentation hydraulique en parallèle.

Si les pressions en C2 et D2 sont inférieures à la pression de réglage des valves 82, 82', il n'y a pas de débit à travers le dispositif limiteur de pression.

Comme illustré à la Figure 3C, dès que l'une des pressions en C2 ou D2 dépasse la valeur de réglage de la valve 82 ou 82', la valve 82' correspondante s'ouvre et laisse échapper le volume d'huile nécessaire pour ramener la pression à une valeur acceptable. Ce volume est réaspiré de l'autre côté par l'autre valve 82 (de C1 vers C2) en passant par le clapet anti-retour.

L'invention n'est pas limitée aux modes de réalisation illustrés dans les dessins.

De plus, le terme « comprenant » n'exclut pas d'autres éléments ou étapes.

## Revendications

1. Machine de manutention comprenant :
- un châssis roulant ;
- un système de manutention (64) comprenant au moins un organe de manutention, actionnable par un vérin (5) hydraulique, tel qu'un vérin d'inclinaison d'un porte-outil de la machine ;
- un système de direction comprenant :
- un circuit de direction (3) hydraulique comprenant des vérins de direction (31-34) permettant de diriger au moins une partie des roues de la machine ;
- un premier circuit (100) de commande hydraulique raccordé au circuit de direction (3) pour pouvoir alimenter les vérins de direction (31-34), et un dispositif manuel de direction (4), tel qu'un volant, raccordé au premier circuit (100) de commande hydraulique ;
- un deuxième circuit (200) de commande hydraulique utilisé au moins pour la commande du vérin (5) hydraulique d'actionnement d'un organe de manutention ;
**caractérisée en ce que** :
le deuxième circuit (200) de commande hydraulique comprend :
- un distributeur hydraulique (210),
- un circuit de raccordement (600) hydraulique raccordé au circuit de direction (3) hydraulique, et
- un déviateur (220) auquel est raccordé le circuit de raccordement (600), le vérin (5) hydraulique d'actionnement d'un organe de manutention, et le distributeur hydraulique (210),
le déviateur (220) étant commandable électriquement pour prendre sélectivement :
- un premier état selon lequel le distributeur hydraulique (210) du deuxième circuit (200) de commande hydraulique est relié au vérin (5) hydraulique d'actionnement dudit organe de manutention, et
- un deuxième état selon lequel le distributeur hydraulique (210) du deuxième circuit (200) de commande hydraulique est relié au circuit de raccordement (600) qui est raccordé au circuit de direction (3), pour permettre au deuxième circuit (200) de commande hydraulique de commander les mêmes vérins de direction que ceux commandables avec le premier circuit (100) de commande hydraulique ;
- une unité de pilotage (10) configurée pour commander le déviateur (220) pour l'amener dans le deuxième état selon lequel le distributeur hydraulique (210) est relié au circuit de raccordement (600) qui est raccordé au circuit de direction (3) afin de pouvoir exécuter un programme de commande de direction de la machine de manutention, par exemple pour garer automatiquement la machine de manutention à un endroit donné.

2. Machine de manutention selon la revendication 1, dans laquelle le système de direction est configuré pour que le premier (100) circuit de commande hydraulique reste commandable par le conducteur de la machine de manutention à l'aide du dispositif manuel de direction (4) pour agir sur le circuit de direction (3), en complément ou en correction du deuxième circuit (200) de commande hydraulique.

3. Machine de manutention selon l'une quelconque des revendications précédentes, dans laquelle le premier circuit de commande (100) et le deuxième circuit de commande (200) sont agencés avec le circuit de direction (3) pour agir sur les mêmes lignes (L32, L300) du circuit de direction (3), de sorte que le deuxième circuit de commande (200) est agencé pour agir sur la direction des mêmes roues que celles sur lesquelles le premier circuit de commande (100) est agencé pour agir, et inversement.

4. Machine de manutention selon l'une quelconque des revendications précédentes, dans laquelle la machine de manutention comprend des roues avant et des roues arrière, le circuit de direction (3) étant configuré pour permettre de diriger au moins les roues avant.

5. Machine de manutention selon l'une quelconque des revendications précédentes, dans laquelle le deuxième circuit de commande (200) hydraulique est raccordé à des lignes (L32, L300) du circuit de direction (3) qui sont raccordées au premier circuit (100) de commande hydraulique.

6. Machine manutention selon l'une quelconque des revendications précédentes, dans laquelle le circuit de direction (3) comprend un sélecteur (300) permettant de sélectionner les roues à diriger.

7. Machine manutention selon l'une quelconque des revendications précédentes, dans laquelle, le circuit de direction (3) comprenant un sélecteur (300) permettant de sélectionner les roues à diriger, le deuxième circuit (200) de commande hydraulique est raccordé au circuit de direction (3), entre le premier circuit de commande (100) et le sélecteur (300).

8. Machine de manutention selon l'une quelconque des revendications précédentes, dans laquelle le circuit de direction (3) comprend un sélecteur (300) configuré pour pouvoir prendre sélectivement plusieurs états, dont :
- un état dans lequel les lignes du circuit de direction (3) sont configurées de sorte que seules les roues avant sont dirigeables à l'aide du circuit de direction hydraulique ;
- un état dans lequel les lignes du circuit de direction (3) sont configurées de sorte que les roues avant et les roues arrière sont dirigeables dans le même sens à l'aide du circuit de direction hydraulique ; et
- un état dans lequel les lignes du circuit de direction (3) sont configurées de sorte que les roues avant et les roues arrière sont dirigeables en sens opposé les unes des autres à l'aide du circuit de direction hydraulique.

9. Machine de manutention selon l'une quelconque des revendications 6 à 8, dans laquelle une ligne (L62) du deuxième circuit (200) de commande hydraulique est raccordée à une ligne (L300) du circuit de direction (3) qui s'étend entre le sélecteur (300) et le premier circuit (100) de commande hydraulique.

10. Machine de manutention selon la revendication précédente, dans laquelle une autre ligne (L61) du deuxième circuit (200) de commande hydraulique est raccordée à une ligne (L32) du circuit de direction (3) qui s'étend entre un vérin de direction (300), de préférence un vérin de direction d'une roue avant, et le premier circuit (100) de commande hydraulique.

11. Machine de manutention selon l'une quelconque des revendications précédentes, dans laquelle le vérin (5) hydraulique d'actionnement d'un organe de manutention est un vérin d'inclinaison d'un porte-outil de la machine de manutention.

12. Machine de manutention selon l'une quelconque des revendications précédentes, dans laquelle au moins l'un, de préférence chacun, des premier et deuxième circuits de commande (100, 200), comprend un dispositif limiteur de pression (180, 680).

13. Machine de manutention selon la revendication 12, dans laquelle au moins l'un, de préférence chacun, des dispositifs limiteur de pression (180, 680) comprend une double valve d'équilibrage.

14. Machine de manutention selon l'une quelconque des revendications 12 ou 13, dans laquelle le dispositif limiteur de pression (180) du premier circuit de commande (100) est situé entre une pompe de distribution (PDD) du premier circuit de commande (100) et le circuit de direction (3) hydraulique.

15. Machine de manutention selon l'une quelconque des revendications 12 à 14, dans laquelle le dispositif limiteur de pression (680) du deuxième circuit de commande (200) est situé sur le circuit de raccordement (600).

## Patentansprüche

1. Handhabungsmaschine, umfassend:
- ein Fahrgestell;
- ein Handhabungssystem (64), umfassend mindestens ein Handhabungsorgan, das durch einen Hydraulikzylinder (5) wie einen Neigungszylinder eines Werkzeughalters der Maschine betätigbar ist;
- ein Lenksystem, umfassend:
- einen hydraulischen Lenkkreis (3), umfassend Lenkzylinder (31-34), die das Lenken mindestens eines Teils der Räder der Maschine ermöglichen;
- einen ersten hydraulischen Steuerkreis (100), der an den Lenkkreis (3) angeschlossen ist, um die Lenkzylinder (31-34) versorgen zu können, und eine manuelle Lenkvorrichtung (4) wie ein Lenkrad, die an den ersten hydraulischen Steuerkreis (100) angeschlossen ist;
- einen zweiten hydraulischen Steuerkreis (200), der mindestens zur Steuerung des hydraulischen Betätigungszylinders (5) eines Handhabungsorgans verwendet wird;
**dadurch gekennzeichnet, dass**:
der zweite hydraulische Steuerkreis (200) umfasst:
- einen Hydraulikverteiler (210),
- einen hydraulischen Anschlusskreis (600), der an den hydraulischen Lenkkreis (3) angeschlossen ist, und
- ein Wegeventil (220), an das der Anschlusskreis (600), der hydraulische Betätigungszylinder (5) eines Handhabungsorgans und der Hydraulikverteiler (210) angeschlossen sind,
wobei das Wegeventil (220) elektrisch steuerbar ist, um selektiv Folgendes anzunehmen:
- einen ersten Zustand, in dem der Hydraulikverteiler (210) des zweiten hydraulischen Steuerkreises (200) mit dem hydraulischen Betätigungszylinder (5) des Handhabungsorgans verbunden ist, und
- einen zweiten Zustand, in dem der Hydraulikverteiler (210) des zweiten hydraulischen Steuerkreises (200) mit dem Anschlusskreis (600) verbunden ist, der an den Lenkkreis (3) angeschlossen ist, um dem zweiten hydraulischen Steuerkreis (200) zu ermöglichen, die gleichen Lenkzylinder zu steuern wie diejenigen, die mit dem ersten hydraulischen Steuerkreis (100) steuerbar sind;
- eine Ansteuerungseinheit (10), die dazu ausgestaltet ist, das Wegeventil (220) zu steuern, um es in den zweiten Zustand zu versetzen, in dem der Hydraulikverteiler (210) mit dem Anschlusskreis (600) verbunden ist, der an den Lenkkreis (3) angeschlossen ist, um ein Lenksteuerungsprogramm der Handhabungsmaschine ausführen zu können, beispielsweise, um die Handhabungsmaschine automatisch an einem bestimmten Ort zu parken.

2. Handhabungsmaschine nach Anspruch 1, wobei das Lenksystem dazu ausgestaltet ist, dass der erste hydraulische Steuerkreis (100) durch den Fahrer der Handhabungsmaschine mithilfe der manuellen Lenkvorrichtung (4) steuerbar bleibt, um ergänzend oder Korrektur des zweiten hydraulischen Steuerkreises (200) auf den Lenkkreis (3) einzuwirken.

3. Handhabungsmaschine nach einem der vorhergehenden Ansprüche, wobei der erste Steuerkreis (100) und der zweite Steuerkreis (200) mit dem Lenkkreis (3) dazu ausgelegt sind, auf die gleichen Leitungen (L32, L300) des Lenkkreises (3) einzuwirken, so dass der zweite Steuerkreis (200) dazu ausgelegt ist, auf die Lenkung derselben Räder einzuwirken wie diejenigen, auf die der erste Steuerkreis (100) auslegungsgemäß einwirkt, und umgekehrt.

4. Handhabungsmaschine nach einem der vorhergehenden Ansprüche, wobei die Handhabungsmaschine Vorderräder und Hinterräder umfasst, wobei der Lenkkreis (3) dazu ausgestaltet ist, das Lenken mindestens der Vorderräder zu ermöglichen.

5. Handhabungsmaschine nach einem der vorhergehenden Ansprüche, wobei der zweite hydraulische Steuerkreis (200) an Leitungen (L32, L300) des Lenkkreises (3) angeschlossen ist, die an den ersten hydraulischen Steuerkreis (100) angeschlossen sind.

6. Handhabungsmaschine nach einem der vorhergehenden Ansprüche, wobei der Lenkkreis (3) eine Wählvorrichtung (300) umfasst, die das Auswählen der zu lenkenden Räder ermöglicht.

7. Handhabungsmaschine nach einem der vorhergehenden Ansprüche, wobei, wenn der Lenkkreis (3) eine Wählvorrichtung (300) umfasst, die das Auswählen der zu lenkenden Räder ermöglicht, der zweite hydraulische Steuerkreis (200) an den Lenkkreis (3) zwischen dem ersten Steuerkreis (100) und der Wählvorrichtung (300) angeschlossen ist.

8. Handhabungsmaschine nach einem der vorhergehenden Ansprüche, wobei der Lenkkreis (3) eine Wählvorrichtung (300) umfasst, die dazu ausgestaltet ist, selektiv mehrere Zustände annehmen zu können, darunter:
- einen Zustand, in dem die Leitungen des Lenkkreises (3) so ausgestaltet sind, dass nur die Vorderräder mithilfe des hydraulischen Lenkkreises lenkbar sind;
- einen Zustand, in dem die Leitungen des Lenkkreises (3) so ausgestaltet sind, dass die Vorderräder und die Hinterräder mithilfe des hydraulischen Lenkkreises in die gleiche Richtung lenkbar sind; und
- einen Zustand, in dem die Leitungen des Lenkkreises (3) so ausgestaltet sind, dass die Vorderräder und die Hinterräder mithilfe des hydraulischen Lenkkreises zueinander in entgegengesetzte Richtungen lenkbar sind.

9. Handhabungsmaschine nach einem der Ansprüche 6 bis 8, wobei eine Leitung (L62) des zweiten hydraulischen Steuerkreises (200) an eine Leitung (L300) des Lenkkreises (3) angeschlossen ist, die sich zwischen der Wählvorrichtung (300) und dem ersten hydraulischen Steuerkreis (100) erstreckt.

10. Handhabungsmaschine nach dem vorhergehenden Anspruch, wobei eine andere Leitung (L61) des zweiten hydraulischen Steuerkreises (200) an eine Leitung (L32) des Lenkkreises (3) angeschlossen ist, die sich zwischen einem Lenkzylinder (300), bevorzugt einem Lenkzylinder eines Vorderrades, und dem ersten hydraulischen Steuerkreis (100) erstreckt.

11. Handhabungsmaschine nach einem der vorhergehenden Ansprüche, wobei der hydraulische Betätigungszylinder (5) eines Handhabungsorgans ein Neigungszylinder eines Werkzeughalters der Handhabungsmaschine ist.

12. Handhabungsmaschine nach einem der vorhergehenden Ansprüche, wobei mindestens einer, bevorzugt jeder, der ersten und zweiten Steuerkreise (100, 200) eine Druckbegrenzungseinrichtung (180, 680) umfasst.

13. Handhabungsmaschine nach Anspruch 12, wobei mindestens eine, bevorzugt jede, der Druckbegrenzungseinrichtungen (180, 680) ein doppeltes Ausgleichsventil umfasst.

14. Handhabungsmaschine nach einem der Ansprüche 12 oder 13, wobei die Druckbegrenzungseinrichtung (180) des ersten Steuerkreises (100) zwischen einer Verteilerpumpe (PDD) des ersten Steuerkreises (100) und dem hydraulischen Lenkkreis (3) gelegen ist.

15. Handhabungsmaschine nach einem der Ansprüche 12 bis 14, wobei die Druckbegrenzungseinrichtung (680) des zweiten Steuerkreises (200) in dem Anschlusskreis (600) gelegen ist.

## Claims

1. A handling machine including:
- a mobile chassis;
- a handling system (64) comprising at least one handling member that can be actuated by a hydraulic cylinder (5), such as a cylinder for inclining a tool-holder of the machine;
- a steering system comprising:
- a hydraulic steering circuit (3) including steering cylinders (31-34) for steering at least some of the wheels of the machine;
- a first hydraulic control circuit (100) connected to the steering circuit (3) to be able to feed the steering cylinders (31-34) and a manual steering device (4) such as a steering wheel connected to the first hydraulic control circuit (100);
- a second hydraulic control circuit (200) used at least to control the actuator hydraulic cylinder (5) of a handling member;
**characterized in that**:
the second hydraulic control circuit (200) includes:
- a hydraulic distributor (210);
- a hydraulic connection circuit (600) connected to the hydraulic steering circuit (3); and
- a diverter (220) to which are connected the connecting circuit (600), the hydraulic cylinder (5) for actuating a handling member, and the hydraulic distributor (210);
the diverter (220) being electrically controllable to assume selectively:
- a first state in which the hydraulic distributor (210) of the second hydraulic control circuit (200) is connected to the actuator hydraulic cylinder (5) of said handling member; and
- a second state in which the hydraulic distributor (210) of the second hydraulic control circuit (200) is connected to the connecting circuit (600) that is connected to the steering circuit (3) to enable the second hydraulic control circuit (200) to control the same steering cylinders as those controllable by the first hydraulic control circuit (100);
- a control unit (10) configured to control the diverter (220) to place it in the second state in which the hydraulic distributor (210) is connected to the connecting circuit (600) that is connected to the steering circuit (3) in order to be able to execute a handling machine steering control program, for example for parking the handling machine automatically in a given place.

2. The handling machine as claimed in claim 1 in which the steering system is configured so that the first hydraulic control circuit (100) remains controllable by the driver of the handling machine using the manual steering device (4) to act on the steering circuit (3), complementing or correcting the second hydraulic control circuit (200).

3. The handling machine as claimed in either one of the preceding claims in which the first control circuit (100), the second control circuit (200) and the steering circuit (3) act on the same lines (L32, L300) of the steering circuit (3) so that the second control circuit (200) is adapted to act on the steering of the same wheels as those on which the first control circuit (100) is adapted to act, and vice versa.

4. The handling machine as claimed in any one of the preceding claims including front wheels and rear wheels, the steering circuit (3) being configured to enable steering of at least the front wheels.

5. The handling machine as claimed in any one of the preceding claims in which the second hydraulic control circuit (200) is connected to lines (L32, L300) of the steering circuit (3) that are connected to the first hydraulic control circuit (100).

6. The handling machine as claimed in any one of the preceding claims in which the steering circuit (3) includes a selector (300) for selecting the wheels to be steered.

7. The handling machine as claimed in any one of the preceding claims in which, the steering circuit (3) including a selector (300) for selecting the wheels to be steered, the second hydraulic control circuit (200) is connected to the steering circuit (3) between the first control circuit (100) and the selector (300).

8. The handling machine as claimed in any one of the preceding claims in which the steering circuit (3) includes a selector (300) configured to be able to adopt a plurality of states selectively, said states including:
- a state in which the lines of the steering circuit (3) are configured so that only the front wheels are steerable with the aid of the hydraulic steering circuit;
- a state in which the lines of the steering circuit (3) are configured so that the front wheels and the rear wheels are steerable in the same sense with the aid of the hydraulic steering circuit; and
- a state in which the lines of the steering circuit (3) are configured so that the front wheels and the rear wheels are steerable in opposite senses to one another with the aid of the hydraulic steering circuit.

9. The handling machine as claimed in any one of claims 6 to 8 in which a line (L62) of the second hydraulic control circuit (200) is connected to a line (L300) of the steering circuit (3) that extends between the selector (300) and the first hydraulic control circuit (100).

10. The handling machine as claimed in the preceding claim in which another line (L61) of the second hydraulic control circuit (200) is connected to a line (L32) of the steering circuit (3) that extends between a steering cylinder (300), preferably a front wheel steering cylinder, and the first hydraulic control circuit (100).

11. The handling machine as claimed in any one of the preceding claims in which the hydraulic cylinder (5) for actuating a handling member is a cylinder for inclining a tool-holder of the handling machine.

12. The handling machine as claimed in any one of the preceding claims in which at least one of the first and second control circuits (100, 200) and preferably each of them includes a pressure limiter device (180, 680).

13. The handling machine as claimed in claim 12 in which at least one of the pressure limiter devices (180, 680) and preferably each of them includes a dual balancing valve.

14. The handling machine as claimed in either one of claims 12 or 13 in which the pressure limiter device (180) of the first control circuit (100) is situated between a steering pump (PDD) of the first control circuit (100) and the hydraulic steering circuit (3).

15. The handling machine as claimed in any one of claims 12 to 14 in which the pressure limiter device (680) of the second control circuit (200) is situated in the connecting circuit (600).
